# DEMANDE DE BREVET EUROPEEN

(11) **EP 4 092 796 A1**
(43) Date de publication de la demande: **23.11.2022**
(21) Numéro de dépôt: 22173661.4
(22) Date de dépôt: 17.05.2022
(51) Int. Cl.: H01M 10/04, H01M 10/613, H01M 10/62, H01M 10/643, H01M 10/6555, H01M 10/6557, H01M 10/6562

(54) **MODULE BATTERIE**

(30) Priorité: 21.05.2021 FR 2105329
(71) Demandeur: SAFT, 92300 Lavallois-Perret (FR)
(72) Inventeur: TRICOT, Hélène, 86700 VALENCE EN POITOU (FR); PASQUIER, Eric, 86280 SAINT-BENOÎT (FR); ROCHARD, Damien, 86800 Sèvres-Anxaumont (FR)
(74) Mandataire: Hirsch & Associés

(57) **Abrégé**

Un module batterie (1) comprenant :
- au moins trois éléments électrochimiques (2) ;
- un drain thermique (3) ;
- pour chaque élément électrochimique, un moyen de fixation (4) de l'élément au drain thermique, le moyen de fixation étant disposé entre une paroi de l'élément et le drain thermique ;
- au moins une pièce de contact (5) disposée sur le drain thermique, ladite pièce de contact étant configurée pour permettre la fixation du module batterie à un support.
Le module batterie peut être utilisé dans des conditions dans lesquelles le transfert de chaleur s'effectue par conduction dans un environnement de vide. Le module batterie est autoportant.

## Description

### Domaine technique de l'invention

Le domaine technique de la présente invention est celui des modules batterie et des dispositifs destinés au refroidissement des éléments logés dans ces modules batterie.

### Contexte de l'invention

Un élément électrochimique, encore appelé élément dans ce qui suit, est généralement conçu pour fonctionner dans une plage de température dite nominale. L'utilisation d'un élément hors de la plage nominale de température peut entraîner une limitation de ses performances ou son vieillissement prématuré. Par exemple, une charge menée à une température trop basse peut conduire à un élément insuffisamment chargé. Inversement, une charge ou une décharge menée à une température excessive peut conduire à une dégradation rapide des composants de l'élément. Même utilisé dans la plage nominale de température, un élément fonctionnant à forte puissance sur une longue période génère une grande quantité de chaleur. Si cette chaleur n'est pas suffisamment dissipée par l'environnement, comme l'air ambiant, on peut observer un emballement thermique de l'élément, voire sa destruction.

Par ailleurs, il est d'usage de regrouper différents éléments électrochimiques et de les connecter entre eux en série et/ou en parallèle afin d'élever la tension et la quantité d'électricité disponibles. Les éléments sont solidarisés pour former un module batterie, encore appelé module dans ce qui suit. Le module comprend également généralement un circuit électronique de contrôle et de gestion des éléments, destiné à mesurer leur état de charge et/ou leur état de santé, notamment au moyen de mesures de tension ou de courant prises individuellement élément par élément ou prises sur un groupe d'éléments.

Plusieurs modules peuvent être à leur tour connectés ensemble en série et/ou en parallèle permettant ainsi d'atteindre les valeurs de tension et de quantité d'électricité requises pour assurer le fonctionnement d'un dispositif électrique. L'ensemble de ces modules connectés entre eux constitue une batterie. Dans un but de maximisation de l'énergie volumique de la batterie, les modules sont généralement disposés très proches les uns des autres. La recherche de compacité peut nuire à une bonne évacuation de la chaleur émise par les modules. Outre la chaleur dégagée par leur propre fonctionnement, les modules peuvent s'échauffer en raison de la chaleur émise par le fonctionnement de modules voisins. De plus, on peut observer une hétérogénéité de distribution des températures entre différents modules. Ceux situés à la périphérie de la batterie, donc non complètement entourés par d'autres modules, évacuent généralement mieux la chaleur que ceux situés au voisinage du centre de la batterie et donc présentent une plus longue durée de vie. Il en résulte une hétérogénéité de vieillissement au sein des différents modules de la batterie.

Il est donc nécessaire de prévoir un dispositif de régulation thermique qui permette de refroidir les éléments électrochimiques d'un module et qui évite ces hétérogénéités de distribution des températures entre les différents modules d'une batterie. Certains dispositifs mettent en oeuvre la circulation d'un fluide caloporteur au contact de la paroi latérale des éléments. On peut citer le document EP-A- 3 319 148. Ce type de dispositif fait circuler un fluide caloporteur dans un canal orienté parallèlement à l'axe longitudinal des éléments. Ce dispositif nécessite l'emploi d'un moteur pour faire circuler le fluide caloporteur dans le canal ce qui rend le dispositif complexe. On peut aussi citer la technologie du caloduc qui permet « sans moteur de circulation » à une zone chaude d'être refroidie par le simple changement de phase (gazeuse à liquide) du fluide caloporteur. Cependant, la réalisation de ces deux dispositifs implique l'utilisation d'un fluide caloporteur et donc la maîtrise de l'étanchéité du dispositif, voire la non toxicité et l'ininflammabilité du fluide. En cas de fuite du fluide caloporteur, il existe un risque élevé de survenue d'un court-circuit, ce qui peut entrainer la destruction totale du module. Enfin, certaines applications aéronautiques ou spatiales requièrent un niveau d'étanchéité très élevé. Ceci rend impossible l'emploi d'un dispositif de refroidissement dont le principe de fonctionnement est fondé sur la circulation d'un fluide de refroidissement.

On recherche un dispositif de refroidissement qui ne fasse pas intervenir de fluide caloporteur et qui néanmoins permette un refroidissement satisfaisant et homogène des modules d'une batterie.

On recherche aussi un dispositif qui combine la fonction de maintien des différents éléments entre eux dans le module et la fonction de refroidissement de ceux-ci.

On recherche aussi un dispositif de refroidissement qui puisse être utilisé dans des conditions dans lesquelles les transferts de chaleur s'effectuent essentiellement par radiation et/ou conduction et quasiment pas par convection. On recherche un dispositif de refroidissement qui puisse convenablement refroidir le module lorsque celui-ci est utilisé dans un vide partiel d'air, voire hors de l'atmosphère terrestre, c'est-à-dire par exemple à une altitude supérieure à environ 800 km.

Outre le problème du refroidissement des éléments du module, se pose également la question de trouver un moyen de fixer les modules d'une batterie à un support afin d'éviter que ceux-ci ne se déplacent en raison des chocs et des vibrations qu'ils subissent. En effet, une batterie peut être placée dans un environnement générant et répercutant des vibrations, par exemple un moteur électrique ou un équipement industriel. Une batterie peut aussi être manipulée par un opérateur ou par des chariots de manutention. Elle subit alors dans ces différentes situations des vibrations susceptibles de déplacer les modules, conséquemment les éléments, et de les endommager. Pour immobiliser les éléments dans les modules, il est connu de les coller sur une plaque servant de base (« baseplate »), généralement en aluminium pour sa propriété de bonne conduction de la chaleur, à l'aide d'une résine durcissable, telle qu'une résine époxy ou polyuréthane. La résine maintient en place les éléments et réduit l'intensité des vibrations transmises aux éléments. La plaque servant de base peut être quant à elle fixée à un dispositif échangeur de chaleur. Ce mode de fixation des éléments dans le module s'accompagne de plusieurs inconvénients :
1) Le durcissement de la résine empêche le démontage et le retrait des éléments en cas de défaillance de ceux-ci. La fixation des éléments à la plaque servant de base est donc irréversible. Les éléments défaillants ne sont pas retirés, réparés puis réinstallés dans la batterie.
2) Certaines résines sont classées dans la catégorie des agents chimiques cancérogènes, mutagènes ou toxiques pour la reproduction (CMR).
3) Enfin, la chaleur émise par les éléments est drainée vers le dispositif échangeur de chaleur, essentiellement par la partie du conteneur des éléments au contact de la résine durcissable, donc la partie basse de l'élément. Cette partie du conteneur ne représente qu'une faible fraction de la surface du conteneur de l'élément, ce qui limite l'efficacité de l'évacuation de la chaleur.

On cherche donc à améliorer l'efficacité du système de drainage de la chaleur et à s'affranchir de l'utilisation d'une résine durcissable.

Par ailleurs, le choix de fixer des modules au dispositif échangeur de chaleur par l'intermédiaire d'une plaque servant de base n'est pas complètement satisfaisant. En effet, la plaque de base est une pièce généralement en métal qui est complexe à usiner car elle doit épouser la forme du conteneur de chacun des éléments du module. Son usinage produit de plus une quantité importante de copeaux. On cherche donc à s'affranchir de son utilisation.

On recherche donc une batterie dans laquelle les modules, conséquemment les éléments, puissent être aisément associés et connectés les uns aux autres (modularité) afin d'atteindre la tension et la quantité d'électricité requises par une application donnée. On recherche également à pouvoir fixer de manière réversible des modules sur un support commun, par exemple un support destiné à évacuer la chaleur des modules, en s'affranchissant de l'emploi d'une plaque servant de base. Il existe donc un besoin de modularité et d'une réversibilité de la fixation des modules au support.

### Résumé de l'invention

La présente invention surmonte les inconvénients susmentionnés en proposant un module batterie comprenant :
- au moins trois éléments électrochimiques ;
- un drain thermique ;
- pour chaque élément électrochimique, un moyen de fixation de l'élément au drain thermique, le moyen de fixation étant disposé entre une paroi de l'élément et le drain thermique ;
- au moins une pièce de contact disposée sur le drain thermique, ladite pièce de contact étant configurée pour permettre la fixation du module batterie à un support.

Il a été découvert qu'il était possible de refroidir de manière satisfaisante un module batterie sans faire appel à la circulation d'un fluide caloporteur. L'association d'un drain thermique dont la forme épouse celle de la paroi des éléments avec des moyens de fixation des éléments au drain thermique permet d'obtenir une bonne dissipation de la chaleur par conduction et une bonne solidité mécanique du module. La pièce de contact placée à l'une des extrémités du drain thermique évacue la chaleur vers un support, tel qu'un panneau échangeur de chaleur. La pièce de contact permet aussi une fixation réversible du module au support. Chaque module constitue une structure unitaire de volume fixe, délivrant une tension et une quantité d'énergie prédéterminée. Le principe de l'assemblage des modules sur le support est comparable à celui des briques sur une plaque dans un jeu de LEGO^{®}. L'invention permet l'assemblage des modules de différentes manières permettant ainsi de fabriquer des batteries présentant, pour une tension et une quantité d'énergie prédéterminées, différentes dimensions. L'invention permet de créer une batterie dont les dimensions sont compatibles avec le volume alloué au compartiment dédié au stockage de la batterie. Le besoin de modularité est donc satisfait. Enfin, l'invention permet le retrait hors de la batterie d'un ou de plusieurs modules en vue d'assurer leur maintenance.

Selon un mode de réalisation, le moyen de fixation est constitué d'un ruban à transfert d'adhésif ou d'une colle.

Selon un mode de réalisation, le moyen de fixation présente une conductivité thermique supérieure ou égale à 130 W/(m.K) à 20°C.

Selon un mode de réalisation, le drain thermique s'étend selon la direction longitudinale des éléments sur une longueur représentant au moins 75% de la longueur des éléments, de préférence la totalité de la longueur des éléments.

Selon un mode de réalisation, le drain thermique est constitué d'un métal, par exemple l'aluminium.

Selon un mode de réalisation, le drain thermique est dépourvu de canal de circulation d'un fluide caloporteur, soit en son sein, soit associé au drain.

Selon un mode de réalisation, le drain thermique est un profilé s'étendant dans la direction de l'axe longitudinal des éléments.

Selon un mode de réalisation, le profilé comprend un alésage central tubulaire.

Selon un mode de réalisation, le module présente 3, 4 ou 5 secteurs identiques, le centre du module étant situé sur l'axe longitudinal du drain thermique.

Selon un mode de réalisation, les éléments électrochimiques sont au nombre de 3, la coupe transversale du drain thermique présente une forme de triangle équilatéral dont chaque face à une forme concave, chaque face concave du triangle étant fixée à une paroi de l'un des 3 éléments par l'intermédiaire du moyen de fixation.

Selon un mode de réalisation, les éléments électrochimiques sont au nombre de 4, la coupe transversale du drain thermique présente une forme d'astroïde, chaque face concave de l'astroïde étant fixée à une paroi de l'un des 4 éléments par l'intermédiaire du moyen de fixation.

Selon un mode de réalisation, le module comprend en outre au moins un cerclage entourant au moins une portion de la paroi latérale de chacun des éléments, ledit au moins un cerclage renforçant ainsi le calage des éléments dans le module.

Selon un mode de réalisation, le module comprend un ou deux cerclages entourant respectivement l'une ou les deux extrémités de chaque élément.

Selon un mode de réalisation, le cerclage a la forme d'un flasque comprenant au moins un évidement apte à s'emboîter avec le fond du conteneur de l'élément et/ou avec le couvercle de l'élément.

Selon un mode de réalisation, le cerclage présente au moins un détrompeur.

Selon un mode de réalisation, les éléments électrochimiques sont de type lithium-ion.

L'invention a également pour objet une batterie comprenant une pluralité de modules batterie tels que décrits ci-avant, les modules batterie étant configurés pour être assemblés de manière démontable à un support.

L'invention a également pour objet l'utilisation de la batterie telle que décrite ci-avant, dans laquelle un transfert de chaleur s'effectue par conduction dans un environnement de vide.

L'utilisation de la batterie peut se faire hors de l'atmosphère terrestre.

Enfin l'invention a pour objet un procédé d'assemblage de modules batterie sur un support, le procédé comprenant les étapes de :
- mise à disposition d'une pluralité de modules batterie tels que décrits ci-avant;
- mise à disposition d'un support présentant une pluralité de points d'encastrement destinés à être fixés aux pièces de contact de la pluralité de modules batterie, les points d'encastrement s'étendant selon deux directions et étant espacés les uns des autres d'une distance constante ;
- encastrement de manière démontable des pièces de contact de la pluralité de modules batterie dans la pluralité de points d'encastrement ;
- réalisation des connexions électriques entre les modules batterie.

### Brève description des figures

Des modes de réalisation de l'invention sont décrits ci-dessous plus en détail avec référence aux figures jointes.
[Fig. 1] montre une vue éclatée en perspective d'un module comprenant quatre éléments.
[Fig. 2] est un détail de la partie basse du module montrant une manière de fixer la pièce de contact au drain thermique et de fixer par vissage la pièce de contact à un support (non représenté).
[Fig. 3] représente une vue en perspective du module après assemblage des différents constituants du module illustré à la figure 1.
[Fig. 4] représente deux formes différentes a) et b) d'une batterie de type 8S5P. Chaque batterie est constituée de dix modules, chaque module comprenant quatre éléments. Les éléments sont connectés en série par groupe de 8. Cinq groupes de 8 éléments sont ensuite connectés en parallèle.
[Fig. 5] représente l'évolution de la température, de la tension et du courant d'une batterie de type 4S3P au cours d'une série de dix cycles de charge/décharge simulant l'utilisation de la batterie dans un satellite à basse orbite terrestre.
[Fig. 6] représente l'évolution de la température, de la tension et du courant d'une batterie de type 4S3P au cours d'un cycle de charge/décharge simulant l'utilisation de la batterie dans un satellite à orbite géostationnaire.

### Description des modes de réalisation de l'invention

### LE MODULE BATTERIE

Le module batterie selon l'invention comprend :
- au moins trois éléments électrochimiques ;
- un drain thermique ;
- pour chaque élément électrochimique, un moyen de fixation de l'élément au drain thermique, le moyen de fixation étant disposé entre une paroi de l'élément et le drain thermique ;
- au moins une pièce de contact disposée sur le drain thermique, ladite pièce de contact étant configurée pour permettre la fixation du module batterie à un support.

### Le drain thermique

Le drain thermique se présente généralement sous la forme d'un profilé, profilé pouvant comprendre un alésage central tubulaire, généralement en métal, typiquement en aluminium. Sa surface est éventuellement revêtue d'un traitement anticorrosion réalisé par oxydation anodique sulfurique ou par chromatation. La surface du drain thermique est isolante électriquement et thermiquement conductrice. L'utilisation de matières plastiques comme matériau constituant le drain est exclue, celles-ci ne présentant pas une conductivité thermique suffisante. L'axe longitudinal du drain thermique est parallèle à l'axe longitudinal de chacun des éléments, c'est-à-dire à l'axe passant par la plus grande dimension de chacun des éléments.

La longueur du drain thermique et celle du moyen de fixation des éléments est ajustée en fonction de la longueur (hauteur) des éléments. Afin de maximiser les échanges thermiques entre les éléments et le drain thermique, le drain thermique et/ou le moyen de fixation s'étend(ent) selon la direction longitudinale des éléments sur une longueur représentant au moins 50% ou au moins 75% ou au moins 90% de la longueur des éléments, de préférence la totalité de la longueur des éléments. L'invention permet le drainage de la chaleur sur toute la hauteur de l'élément, contrairement au cas d'un élément fixé par son fond à une plaque de base (« baseplate ») par l'intermédiaire d'une résine durcissable, lequel évacue sa chaleur quasiment uniquement par le fond, donc par une portion limitée de la surface du conteneur.

Le drain thermique peut présenter un alésage à l'une ou à ses deux extrémités. La surface intérieure de l'alésage peut présenter un filetage permettant d'y fixer par vissage la pièce de contact destinée à la fixation du module au support.

Le drain thermique n'est de préférence ni traversé par un canal dans lequel circule un fluide caloporteur, ni associé ou accolé à un canal de circulation d'un fluide caloporteur. Le drain thermique évacue la chaleur des éléments vers le support selon un mode essentiellement conductif et/ou radiatif et non par convection. Il peut cependant être traversé par une ouverture allant de l'une à l'autre des extrémités du drain thermique. Cette ouverture permet le passage d'un outil destiné à la fixation de la pièce de contact au support, par exemple par vissage. Le drain thermique joue aussi le rôle d'une poutre contre laquelle les éléments électrochimiques s'appuient. Il participe donc au maintien mécanique des éléments.

### Le moyen de fixation des éléments au drain thermique

Le moyen de fixation est disposé entre une portion de la paroi latérale des éléments et le drain thermique. Il peut être constitué d'un ruban à transfert d'adhésif ou d'une colle. De préférence, le moyen de fixation présente une bonne conductivité thermique, par exemple supérieure à 130 W/(m.K) à 20°C ou supérieure à 170 W/(m.K) pour égaler la caractéristique de l'aluminium d'une plaque de base « baseplate ». Le moyen de fixation, éventuellement associé à un ou plusieurs cerclages tel(s) que décrit(s) ci-après, permet la fixation des éléments dans le module sans avoir à recourir à une résine durcissable.

### Les éléments électrochimiques

Le format des éléments électrochimiques n'est pas particulièrement limité tant que la forme de la portion de la paroi du drain thermique en contact avec les éléments épouse la forme du conteneur des éléments, de manière à maximiser l'échange de chaleur par conduction et à assurer un bon contact mécanique. Les éléments peuvent être de format cylindrique ou prismatique, de préférence cylindrique. La technologie des éléments n'est pas limitée. Il peut s'agir d'éléments de type lithium-ion. Les éléments électrochimiques peuvent être de type primaire (« pile » par conséquent non rechargeable) ou de type secondaire (« accumulateur » par conséquent rechargeable).

Les éléments sont assemblés autour du drain thermique. L'axe longitudinal des éléments est parallèle à l'axe longitudinal du drain thermique. Selon un mode de réalisation préféré, le module comporte quatre éléments et la coupe transversale du drain thermique présente une forme d'astroïde, chaque face concave de l'astroïde étant fixée à une portion de la paroi latérale de l'un des quatre éléments par l'intermédiaire du moyen de fixation. Cette forme particulière de la section du drain thermique crée 4 secteurs identiques autour du drain thermique, chaque secteur correspondant à l'emplacement d'un élément.

Selon un autre mode de réalisation préféré, le module comporte trois éléments et la coupe transversale du drain thermique présente une forme de triangle équilatéral dont chaque face a une forme concave, chaque face concave étant fixée à une portion de la paroi latérale de l'un des 3 éléments par l'intermédiaire d'un moyen de fixation. Cette forme particulière de la section du drain thermique crée 3 secteurs identiques autour du drain thermique, chaque secteur correspondant à l'emplacement d'un élément. La configuration d'un module comprenant 4 éléments peut facilement être modifiée en un module comprenant 3 éléments.

Les configurations faisant intervenir 3, 4 ou 5 éléments sont les configurations les plus intéressantes du point de vue de la compacité. Les configurations avec 3 ou 4 éléments sont préférées. Celle avec 4 éléments est optimale du point de vue de la compacité tout en répondant aux contraintes mécaniques, thermiques et électriques.

L'ensemble formé de l'association du drain thermique, des moyens de fixation des éléments au drain thermique et des éléments eux-mêmes constitue une structure autoportante, c'est-à-dire, qu'Il n'est pas nécessaire d'y adjoindre des moyens supplémentaires de maintien des éléments. Par exemple, il n'est pas nécessaire d'avoir recours à une gaine d'un film plastique thermorétractable entourant la surface latérale libre de tous les éléments du module. Les moyens de fixation des éléments permettent à eux seuls la fixation des éléments au drain thermique. Chaque module constitue une structure unitaire de volume fixe, délivrant une tension et une quantité d'énergie prédéterminée.

### La pièce de contact

Le rôle de la pièce de contact est de fixer le module sur le support et de conduire la chaleur émise par les éléments du module vers ce support. La forme de la pièce de contact n'est pas particulièrement limitée. Elle peut se présenter sous la forme d'un disque muni en son centre d'une tige creuse présentant un filetage sur sa surface externe. Ce filetage permet de visser le disque à l'une des extrémités du drain thermique. La face du disque opposée à la tige filetée vient au contact du support. La pièce de contact peut être en aluminium, éventuellement traité contre la corrosion par chromatation. Une vis peut s'insérer dans la partie creuse de la tige et se visser au support.

### Cerclage

Le calage des éléments dans le module peut être amélioré par l'emploi facultatif d'un ou de plusieurs cerclages, généralement deux, entourant au moins une portion de la paroi latérale de chacun des éléments. Un seul cerclage peut être disposé au voisinage du milieu de la longueur (ou hauteur) des éléments. Deux cerclages peuvent être disposés à chaque extrémité des éléments du module.

Un cerclage peut être constitué d'un flasque comprenant autant d'évidements que d'éléments, chaque évidement étant apte à s'emboiter avec le fond du conteneur d'un des éléments et/ou avec le couvercle d'un des éléments. Le cerclage est fait d'un matériau isolant électrique, de préférence une matière plastique.

Un ou plusieurs cerclage(s) peut ou peuvent être muni(s) d'un détrompeur servant à empêcher une connexion non désirée entre deux modules adjacents. Un détrompeur peut être créé en pratiquant une encoche sur le cerclage. Cette encoche est destinée à recevoir un ergot situé sur le cerclage d'un module adjacent. On peut empêcher l'encastrement de deux modules en prévoyant que la taille de l'ergot d'un des modules empêche l'emboitement de l'ergot dans l'encoche située sur le module adjacent. Dans ce cas, si l'un des deux modules est amené vers l'autre module dans une orientation non désirée, l'ergot et l'encoche ne s'emboitent pas. La section transversale de l'encoche peut être de toute forme, carrée, forme de U ou de trapèze.

### Connexion des éléments au sein du module

Au sein d'un module, plusieurs modes de connexion sont possibles. Les éléments électrochimiques peuvent être tous connectés en série ou tous connectés en parallèle. Certains éléments peuvent aussi être connectés en série pour former plusieurs groupes d'éléments connectés en série, puis ces groupes d'éléments peuvent être connectés en parallèle. Également, certains éléments peuvent être connectés en parallèle pour former plusieurs groupes d'éléments connectés en parallèle, puis ces groupes d'éléments peuvent être connectés en série. Les configurations suivantes sont préférées et données à titre d'exemple :
- 4S, c'est-à-dire 4 éléments connectés en série,
- 4P, c'est-à-dire 4 éléments connectés en parallèle,
- 2S2P, configuration dans laquelle des éléments sont connectés deux par deux en série pour former deux groupes d'éléments, les deux groupes de deux éléments connectés en série étant ensuite connectés en parallèle,
- 2P2S, configuration dans laquelle des éléments sont connectés deux par deux en parallèle pour former deux groupes d'éléments, les deux groupes de deux éléments connectés en parallèle étant ensuite connectés en série.

Un cerclage peut servir à regrouper les bornes de sortie de courant positive et négative de tous les éléments du module.

Une carte électronique peut comporter des pistes conductrices dont le dessin détermine le mode de connexion série et/ou parallèle des différents éléments du module en fonction du besoin énergétique. Cette carte électronique peut également comporter des moyens de mesure des niveaux de tensions des éléments et permettre l'équilibrage des tensions entre les éléments. Le mode de connexion des différents éléments du module peut être modifié par simple changement du dessin des pistes conductrices de la carte électronique.

### Exemples de modules

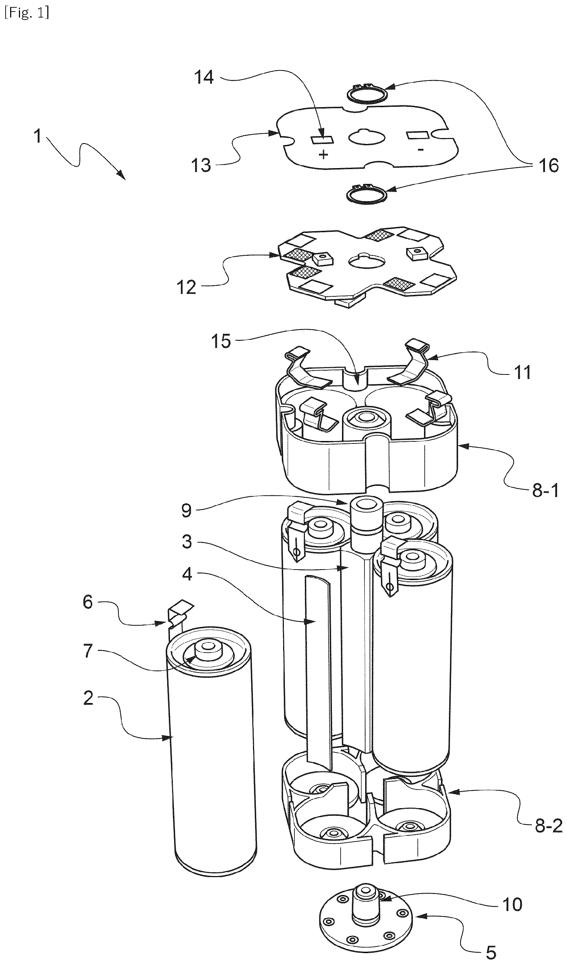

La figure 1 représente une vue éclatée en perspective d'un module (1) comprenant quatre éléments cylindriques (2). Au centre de ces quatre éléments est disposé un drain thermique (3) qui est un profilé dont la section transversale a une forme d'as-troïde. Les éléments sont fixés par une portion de leur paroi à l'une des quatre parois concaves de l'astroïde grâce à un moyen de fixation (4) qui est un ruban adhésif. La pièce de contact (5) est fixée à l'extrémité inférieure du drain thermique. La paroi du conteneur des éléments comporte une languette métallique (6) servant de borne de sortie de courant d'une polarité donnée, par exemple la négative (ici représentée en position latérale sur l'enveloppe de l'élément dans un mode de réalisation). Le bosselage situé au centre des couvercles sur la face supérieure des éléments (7) est connecté à l'électrode positive. Les éléments sont calés à chacune de leurs extrémités par un cerclage (8-1, 8-2) constitué d'un flasque carré aux coins arrondis. Une ouverture est aménagée au centre du flasque supérieur (8-1) pour laisser le passage à un fût (9) servant à fixer le flasque supérieur aux éléments. Ce fût constitue l'extrémité supérieure du drain thermique (3). La pièce de contact (5) est munie d'une tige filetée (10) qui se visse dans l'alésage fileté de l'extrémité inférieure du drain thermique. Les quatre bornes de sortie de courant négatives des quatre éléments passent dans une ouverture prévue à travers l'épaisseur du flasque supérieur. Quatre lamelles métalliques (11) destinées à servir de bornes positives de sortie de courant sont fixées sur le flasque supérieur. L'emboîtement du flasque supérieur sur les couvercles des éléments met en contact le bosselage du couvercle des éléments avec ces quatre lamelles métalliques. Une fois le flasque supérieur emboîté sur les couvercles des quatre éléments, les extrémités des quatre bornes positives de sortie de courant et des quatre bornes négatives de sortie de courant sont situées sensiblement sur un même plan. Une carte électronique (12) comporte des zones destinées à entrer en contact avec les quatre bornes positives de sortie de courant et les quatre bornes négatives de sortie de courant du flasque supérieur. Elle comporte des pistes conductrices reliant électriquement les éléments selon la configuration série et/ou parallèle recherchée. La mise en place de la carte électronique sur les flasques met en connexion les différents éléments du module en série et/ou en parallèle en fonction du besoin énergétique. La carte électronique mesure également les niveaux de tensions des éléments et permet l'équilibrage des tensions des éléments au cours du fonctionnement du module. Un capot protecteur (13) est placé sur la carte électronique. Une ouverture a été pratiquée au centre des flasques supérieur et inférieur ainsi qu'au milieu du capot pour permettre le passage du fût (9) de la partie supérieure du drain thermique (3) et de la tige filetée (10) de la pièce de contact (5) dans la partie inférieure du drain thermique (3). Le capot protecteur (13) présente deux ouvertures qui une fois celui-ci en place laissent passer sur sa face supérieure deux zones de contact électrique (14). Celles-ci servent de bornes positive et négative de sortie de courant du module dans la réalisation présentée de la carte électronique. Quatre encoches (15) sont pratiquées au milieu de chaque côté sur le flasque supérieur et sur le flasque inférieur. L'encoche située du côté de la borne positive du module présente un diamètre différent de celui de l'encoche située du côté de la borne négative du module, constituant ainsi un détrompeur. Le(s) flasque(s) du module peu(ven)t éventuellement selon un mode de réalisation s'emboîter avec le(s) flasque(s) du ou des module(s) disposé(s) côte à côte ainsi que du porte-connecteur de la batterie si elle en est équipée. Des découpes sur les bords du capot protecteur suivent la forme des encoches pratiquées sur les bords des flasques. Des clips d'assemblage (16) permettent de maintenir en place un ou plusieurs des différents composants placés au-dessus des éléments, par exemple, le flasque supérieur, la carte électronique et le capot protecteur. Les clips viennent s'insérer dans des gorges pratiquées sur la surface externe du fût. La position des gorges sur le fût est choisie en fonction du ou des composants à fixer. Il peut s'agir de la carte électronique et du capot protecteur tel qu'illustré à la figure 1. Dans un autre mode de réalisation, il peut s'agir du flasque supérieur et du capot protecteur.

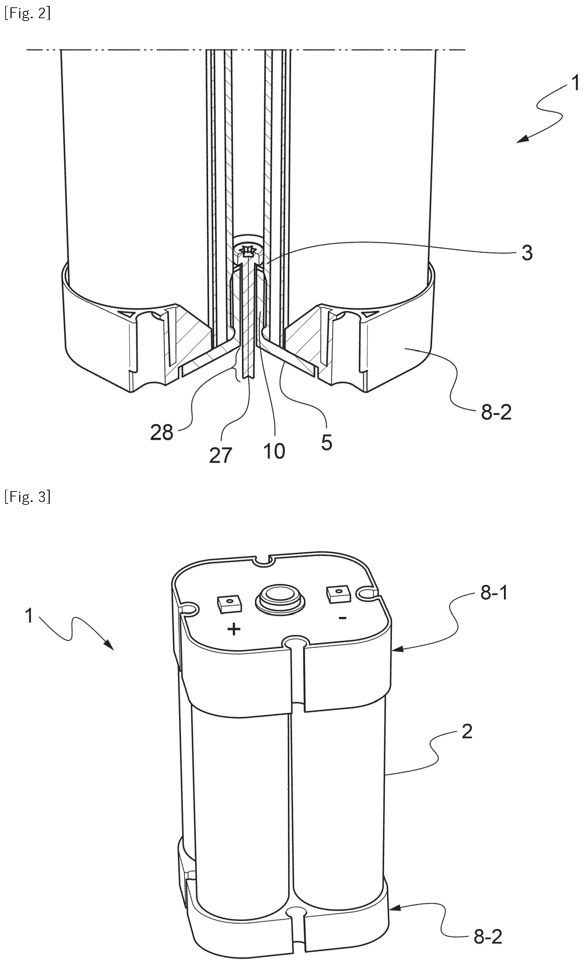

La figure 2 est un détail de la partie inférieure du module (1). On y voit la disposition de la pièce de contact (5) et d'une vis (27) destinée à fixer le module à un support (non représenté). La pièce de contact (5) se présente sous la forme d'un disque prenant appui sur la face inférieure du flasque inférieur (8-2) . Au centre de ce disque se trouve une tige creuse (10) dont la surface externe comporte un filetage. On vient visser la pièce de contact sur l'extrémité inférieure du drain thermique (3). Puis, on insère à travers l'ouverture de l'extrémité supérieure du drain thermique une vis (27) qui vient se loger dans la tige creuse (10) de la pièce de contact. La partie libre (28) de la vis est vissée dans le support. On utilise l'ouverture de l'extrémité supérieure du drain thermique pour y insérer un outil et accéder à la tête de la vis. Comme on peut le constater, cette fixation du module au support est réversible puisqu'il suffit de dévisser la vis pour retirer le module du support.

La figure 3 représente une vue en perspective du module après assemblage des différents constituants du module. Les numéros de référence utilisés sont identiques à ceux utilisés pour les figures 1 et 2.

### FIXATION DES MODULES A UN SUPPORT

Le support peut être de tout type. De préférence, il combine la fonction de fixation des différents modules et celle d'évacuation de la chaleur. Un dispositif échangeur de chaleur pouvant être choisi parmi une structure en forme de nids d'abeille, un caloduc et un panneau d'un satellite.

Le support comporte une pluralité de points d'encastrement destinés à être fixés aux pièces de contact de la pluralité de modules. Les points d'encastrement s'étendent selon les deux directions définissant le plan du support et sont espacés les uns des autres d'une distance constante. La fixation du ou des modules sur le support est amovible (réversible), tout en garantissant un assemblage sécurisé quand elle est en place. Le principe de l'assemblage des modules sur le support est donc comparable à celui des briques sur une plaque dans un jeu de LEGO^{®}. Un module comprenant par exemple 4 éléments est de forme parallélépipèdique et est donc comparable à une brique LEGO^{®}. Chaque module constitue une structure unitaire de volume fixe, délivrant une tension et une quantité d'énergie prédéterminée.

Le procédé d'assemblage de la pluralité de modules batterie sur le support comprend les étapes de :
- mise à disposition d'une pluralité de modules batterie ;
- mise à disposition d'un support présentant une pluralité de points d'encastrement ;
- encastrement de manière réversible (démontable ou amovible) des pièces de contact de la pluralité de modules batterie dans la pluralité de points d'encastrement ;
- réalisation des connexions électriques entre les modules batterie pour former une batterie. Plus rarement, la batterie peut aussi se réduire à un seul module fixé sur le support.

Il est possible de faire varier la quantité totale d'énergie fixée sur le support en ajoutant ou en retirant des modules, l'ajout ou le retrait d'un module permettant respectivement d'incrémenter ou de décrémenter l'énergie disponible dans la batterie d'une quantité égale à la quantité d'énergie emmagasinée dans un module. L'invention permet d'adapter le nombre de modules, donc le nombre de briques à encastrer sur le support, en fonction de la quantité d'énergie requise par l'application à alimenter. En faisant varier le nombre des modules fixés sur le support et en choisissant le mode de connexion série ou parallèle de ces modules, il est possible de satisfaire une grande variété de besoins énergétiques allant par exemple de 1 kWh à 50 kWh. On peut également envisager de retirer un ou plusieurs modules comportant un ou plusieurs éléments défaillants pour le(s) remplacer.

L'assemblage des éléments autour du drain thermique, éventuellement renforcé par la présence d'un ou de plusieurs cerclages, permet d'éviter de recourir à une plaque de base métallique (« baseplate »). La plaque de base qui sert habituellement de fixation des modules au support échangeur de chaleur est supprimée puisque la fixation de la batterie se fait directement sur le support échangeur de chaleur grâce à la pièce de contact.

Le drain thermique et les flasques peuvent être fabriqués par injection. Cette technique permet d'éviter la formation de copeaux.

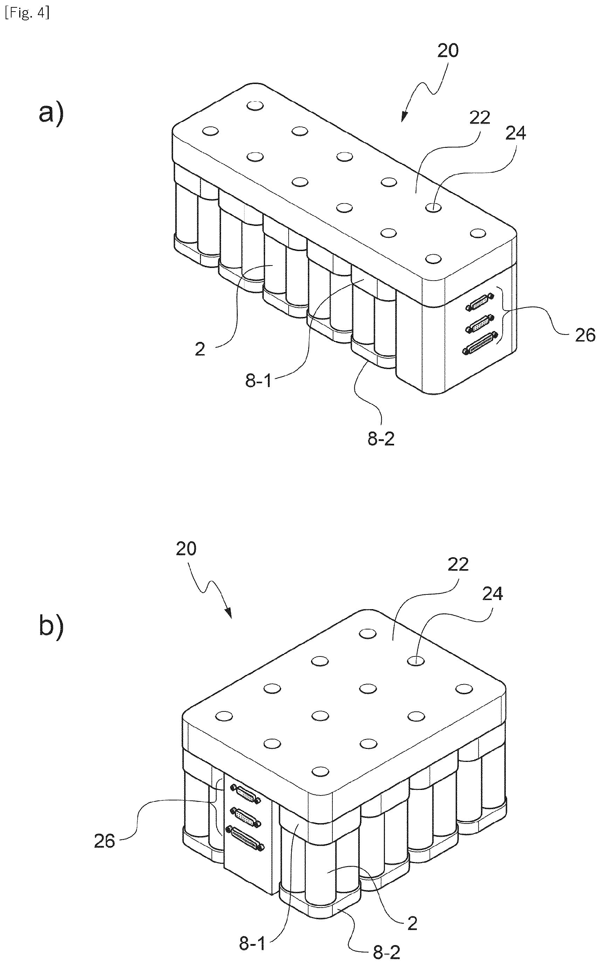

La figure 4 représente deux formats différents a) et b) d'une batterie (20) de type 8S5P. Dans chacun de ces formats, la batterie est constituée par la connexion de 10 modules, chaque module comprenant 4 éléments. Les éléments sont connectés en série par groupe de 8. Cinq groupes de 8 éléments sont ensuite connectés en parallèle. Les éléments d'un module sont munis de flasques supérieur (8-1) et inférieur (8-2). La partie supérieure des flasques est encastrée dans un capot (22). Chaque rond (24) visible sur la face supérieure du capot correspond à l'emplacement d'un drain thermique d'un module. On distingue sur la face avant de la batterie des connecteurs (26) permettant la liaison électrique avec l'application à alimenter. Selon les deux représentations de la batterie (20) de type 8S5P, les connecteurs (26) sont assemblés sur un « porte-connecteur » dont l'interface occupe selon cette définition non limitative deux fois la surface d'un module, comme il est constaté sur le format a) par la présence des 2 ronds (24). Les modules viennent se fixer à un support (non représenté) par leur surface inférieure, c'est-à-dire la surface inférieure des pièces de contact (5), sachant que la surface inférieure des flasques inférieurs (8-2) est en retrait des pièces de contact. La figure 4 illustre donc la possibilité de fabriquer des batteries présentant différentes dimensions pour une tension et une quantité d'énergie déterminées.

### UTILISATIONS DE LA BATTERIE

La batterie (ou le module seul dans le cas d'une batterie comprenant un seul module) peut être utilisée à pression atmosphérique pour toute application scientifique nécessitant un drainage thermique. Elle trouve aussi un intérêt particulier dans certaines applications dans lesquelles le transfert de chaleur par convection est réduit, voire inexistant, par exemple des applications sous vide au moins partiel d'air. La batterie peut être utilisée dans un aéronef ou dans un satellite se déplaçant dans les différentes couches de l'atmosphère terrestre, c'est-à-dire à une altitude inférieure à environ 800 km, ou encore se déplaçant hors de l'atmosphère terrestre, c'est-à-dire à une altitude supérieure à environ 800 km. La batterie peut être installée dans un satellite à basse orbite terrestre (LEO « Low Earth Orbit ») circulant à une altitude comprise entre environ 160 et 2000 km. Elle peut être utilisée dans un satellite orbite terrestre moyenne (« Medium Earth Orbit » (MEO)) circulant à une altitude comprise entre environ 2000 et 36000 km. Elle peut être utilisée dans un satellite à orbite géostationnaire (GEO). Dans ces conditions de vide au moins partiel, étant donné que la transmission de la chaleur s'effectue essentiellement par conduction à travers le drain thermique par l'intermédiaire du moyen de fixation, c'est l'aire de la surface de contact entre un élément et le drain thermique qui détermine l'efficacité avec laquelle la chaleur est évacuée. Or l'aire de la surface de contact entre un élément et le drain thermique est la même pour tous les éléments du module. Par conséquent, le module selon l'invention est peu sensible aux effets de bord. La température d'un module situé au voisinage du centre de la batterie ne sera donc pas notablement supérieure à celle d'un module situé en périphérie (au bord) de la batterie. Le drain thermique et le moyen de fixation associé à chaque élément du module confèrent à tout module une indépendance tant du point de vue du maintien mécanique des éléments que de leur refroidissement. Chaque module assure le maintien et le refroidissement des éléments qu'il contient. Les propriétés de refroidissement et de maintien des éléments d'un module donné ne sont pas affectées par la présence d'autres modules situés dans l'entourage de ce module.

De plus, les différents modules ne sont pas directement en contact les uns des autres. Etant isolés les uns des autres, le risque de propagation d'un emballement thermique entre modules est limité.

### EXEMPLES

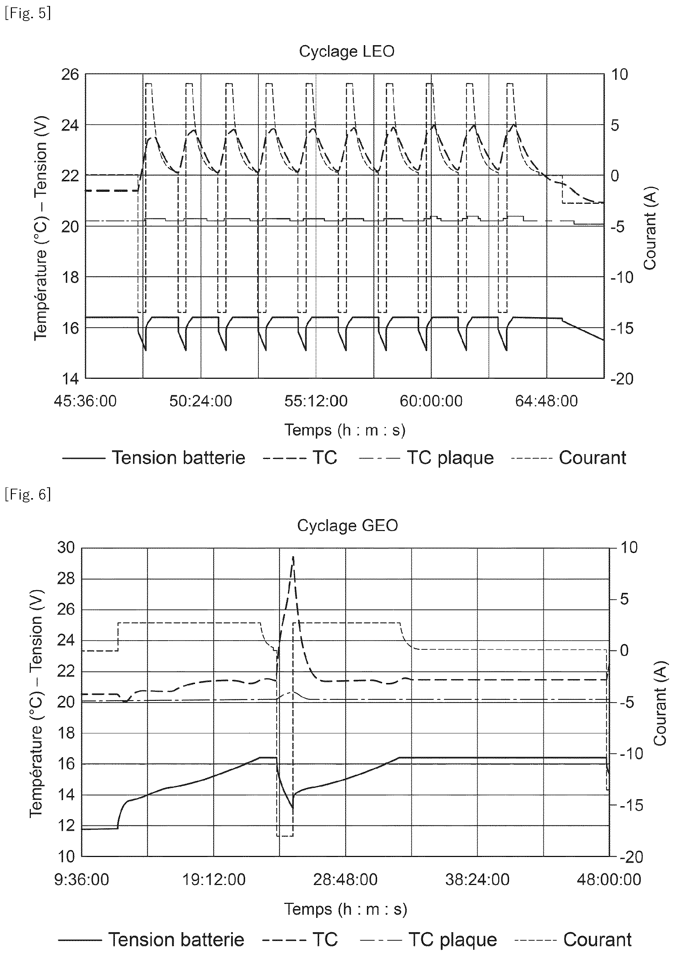

Exemple 1 : Une batterie de type 4S3P a été fabriquée. Elle est constituée de 3 modules en parallèle, chaque module étant constitué de 4 éléments en série. Les 3 modules ont été fixés à une plaque servant de support. La batterie a été soumise à une série de cycles de charge/décharge simulant son fonctionnement dans un satellite à basse orbite terrestre, c'est-à-dire à une altitude comprise entre 160 et 2000 km. A une telle orbite, le satellite effectue une révolution complète autour de la terre en environ 90 minutes. Au cours de cette révolution, la batterie effectue un cycle de charge/décharge. La température de la batterie et celle de la plaque servant de support ont été mesurées au cours d'une série de 10 cycles de charge/décharge. La figure 5 représente l'évolution de la température, de la tension et du courant de la batterie pendant ces 10 cycles.

On constate que la température de la batterie est comprise entre 22 et 24°C et qu'elle augmente très peu pendant le cyclage. La température mesurée est conforme à l'attendu et montre l'efficacité du drain thermique associé à la pièce de contact. La température de la plaque servant de support reste quasiment constante à 20°C au cours du cyclage.

Exemple 2 : La même batterie que celle de l'exemple 1 a été soumise à un cycle de charge/décharge simulant son fonctionnement dans un satellite à orbite géostationnaire, c'est-à-dire à une altitude d'environ 36000 km. A une telle orbite, le satellite effectue une révolution complète autour de la terre en 24 heures. Au cours de cette révolution, la batterie effectue un cycle de charge/décharge. La température de la batterie et celle de la plaque servant de support ont été mesurées pendant le cycle. La figure 6 représente l'évolution de la température, de la tension et du courant de la batterie pendant ce cycle de charge/décharge.

On constate que la température de l'assemblage batterie est d'environ 21°C et qu'elle augmente très peu au cours du cyclage. La température mesurée est conforme à l'attendu et montre l'efficacité du drain thermique associé à la pièce de contact. La température de la plaque servant de support reste quasiment constante à 20°C au cours du cyclage.

## Revendications

1. Module batterie (1) comprenant :
- au moins trois éléments électrochimiques (2) ;
- un drain thermique (3);
- pour chaque élément électrochimique, un moyen de fixation (4) de l'élément au drain thermique, le moyen de fixation étant disposé entre une paroi de l'élément et le drain thermique ;
- au moins une pièce de contact (5) disposée sur le drain thermique, ladite pièce de contact étant configurée pour permettre la fixation du module batterie à un support.

2. Module batterie selon la revendication 1, dans lequel le moyen de fixation (4) est constitué d'un ruban à transfert d'adhésif ou d'une colle.

3. Module batterie selon la revendication 2, dans lequel le moyen de fixation présente une conductivité thermique supérieure ou égale à 130 W/(m.K) à 20°C.

4. Module batterie selon l'une des revendications précédentes, dans lequel le drain thermique s'étend selon la direction longitudinale des éléments sur une longueur représentant au moins 75% de la longueur des éléments, de préférence la totalité de la longueur des éléments.

5. Module batterie selon l'une des revendications précédentes, dans lequel le drain thermique est constitué d'un métal, par exemple l'aluminium.

6. Module batterie selon l'une des revendications précédentes, dans lequel le drain thermique est dépourvu de canal de circulation d'un fluide caloporteur, soit en son sein, soit associé au drain.

7. Module batterie selon l'une des revendications précédentes, dans lequel le drain thermique est un profilé s'étendant dans la direction de l'axe longitudinal des éléments.

8. Module batterie selon la revendication 7, dans lequel le profilé comprend un alésage central tubulaire.

9. Module batterie selon la revendication 7 ou 8, présentant 3, 4 ou 5 secteurs identiques, le centre du module étant situé sur l'axe longitudinal du drain thermique.

10. Module batterie selon l'une des revendications précédentes, dans lequel les éléments électrochimiques sont au nombre de 3, la coupe transversale du drain thermique présente une forme de triangle équilatéral dont chaque face à une forme concave, chaque face concave du triangle étant fixée à une paroi de l'un des 3 éléments par l'intermédiaire du moyen de fixation.

11. Module batterie selon l'une des revendications 1 à 9, dans lequel les éléments électrochimiques sont au nombre de 4, la coupe transversale du drain thermique présente une forme d'astroïde, chaque face concave de l'astroïde étant fixée à une paroi de l'un des 4 éléments par l'intermédiaire du moyen de fixation.

12. Module batterie selon l'une des revendications précédentes, comprenant en outre au moins un cerclage (8-1, 8-2) entourant au moins une portion de la paroi latérale de chacun des éléments (2), ledit au moins un cerclage renforçant ainsi le calage des éléments dans le module.

13. Module batterie selon la revendication 13, comprenant un ou deux cerclages (8-1, 8-2) entourant respectivement l'une ou les deux extrémités de chaque élément.

14. Module batterie selon la revendication 13, dans lequel le cerclage a la forme d'un flasque (8-1, 8-2) comprenant au moins un évidement apte à s'emboîter avec le fond du conteneur de l'élément et/ou avec le couvercle de l'élément.

15. Module batterie selon l'une des revendications 12 à 14, dans lequel le cerclage présente au moins un détrompeur (15).

16. Module batterie selon l'une des revendications précédentes, dans lequel les éléments électrochimiques sont de type lithium-ion.

17. Batterie comprenant une pluralité de modules batterie selon l'une des revendications 1 à 16, les modules batterie étant configurés pour être assemblés de manière démontable à un support.

18. Utilisation de la batterie selon la revendication 17, dans laquelle un transfert de chaleur s'effectue par conduction dans un environnement de vide.

19. Utilisation selon la revendication 18, dans laquelle la batterie est hors de l'atmosphère terrestre.

20. Procédé d'assemblage de modules batterie (1) sur un support, le procédé comprenant les étapes de :
- mise à disposition d'une pluralité de modules batterie selon l'une des revendications 1 à 16 ;
- mise à disposition d'un support présentant une pluralité de points d'encastrement destinés à être fixés aux pièces de contact (5) de la pluralité de modules batterie, les points d'encastrement s'étendant selon deux directions et étant espacés les uns des autres d'une distance constante ;
- encastrement de manière démontable des pièces de contact de la pluralité de modules batterie dans la pluralité de points d'encastrement ;
- réalisation des connexions électriques entre les modules batterie.
